# EUROPÄISCHE PATENTANMELDUNG

(11) **EP 4 446 614 A1**
(43) Veröffentlichungstag der Anmeldung: **16.10.2024**
(21) Anmeldenummer: 24169427.2
(22) Anmeldetag: 10.04.2024
(51) Int. Cl.: F16H 7/02, F16H 55/08, F16H 55/17

(54) **ZAHNSCHEIBE**

(30) Priorität: 14.04.2023 DE 102023203391
(71) Anmelder: ContiTech Deutschland GmbH, 30175 Hannover (DE)
(72) Erfinder: Lorenz, Eduard, 30175 Hannover (DE); Bleeke, Jan, 30175 Hannover (DE); Hunger, Frederik, 30175 Hannover (DE)
(74) Vertreter: Continental Corporation

(57) **Zusammenfassung**

Die Erfindung betrifft eine Zahnscheibe (1) für einen Zahnriementrieb, bei dem ein Zahnriemen (9) mit seiner verzahnten Antriebsseite die Zahnscheibe (1) umlaufend umschlingt und die Verzahnungen von Zahnscheibe (1) und Zahnriemen (9) kämmend ineinandergreifen, wobei die Zahnscheibe (1) jeweils an einem Zahnzwischenraum (5) zwischen zwei Zähnen (3) über einen Teil einer Zahnbreite (Bz) zum Inneren der Zahnscheibe (1) weisende Öffnungen (2) zur Abfuhr von Fremdkörpern oder Verschmutzungen aufweist. Die Zahnscheibe (1) weist wenigstens einen in Umfangsrichtung (U) jeweils zwischen zwei Zähnen (3) angeordneten Steg (4) auf, wobei der Steg (4) zur Aufnahme eines Zahnkopfs (10) des Zahnriemens (9) ausgebildet ist.

## Beschreibung

Die Erfindung betrifft eine Zahnscheibe gemäß dem Oberbegriff des Anspruchs 1. Weiterhin betrifft die Erfindung einen Zahnriementrieb mit einer solchen Zahnscheibe sowie eine Fördereinrichtung und ein Zweirad mit einem solchen Zahnriementrieb.

Zahnriemen können wesentlich höhere Drehmomente als vergleichbare Flach- der Keilriemen übertragen, sind aber auch anfällig gegenüber Störungen des Zahneingriffs durch Verschmutzungen. Bei einem geschlossenen Zahnprofil können die Zähne des Antriebsriemens zwar optimal an der Zahnscheibe anliegen, es können sich jedoch im Zahnprofil Fremdkörper ansammeln. Dies kann den Kontakt zwischen dem Riemen bzw. dessen Zähnen und der Zahnscheibe beeinträchtigen und insbesondere die Tiefe des Profils der Zahnscheibe derart verringern, dass es zu einem Überspringen des Riemens gegenüber der Zahnscheibe kommen kann. Auch kann der Riemen hierdurch erhöhte Knickbelastungen erfahren, wodurch der Riemen mechanisch geschwächt werden kann und das Risiko eines Versagens, z. B. durch Reißen des Riemens, erhöht wird.

Daher sind Zahnriementriebe mit Zahnscheiben, die an ihrem Zahngrund zum Inneren der Zahnscheibe weisende Öffnungen zur Abfuhr von Fremdkörpern oder Verschmutzungen aufweisen, so genannte offene Zahnscheiben, im Stand der Technik bekannt bei z.B. Zahnriemenantrieben für Zweiräder oder für andere Antriebs- oder Fördersysteme in rauen, steinigen oder staubigen Umgebungen.

Ganz allgemein betrachtet ergeben sich beim Umlauf während des kämmenden Eingriffs der Zahnpaarung zwischen Zahnscheibe und Zahnriemen - abhängig von der Kinematik und der Zahnprofilgestaltung - natürlich gänzlich andere Eingriffsverhältnisse als z.B. beim Abwälzen ineinandergreifender Zahnräder mit der dort üblichen Evolventenverzahnung. So können bei einem Riementrieb die Profilgestaltungen von Zahnriemen und Zahnscheibe entweder so ausgebildet sein, dass die Riemenstege des Zahnriemens, also die Bereiche zwischen den Riemenzähnen, sich auf den Zahnköpfen der der Scheibenverzahnung abstützen, oder so, dass sich der Zahnriemen mit seiner Zahnkopffläche in den Zahnlücken der Scheibenverzahnung abstützt.

Bei manchen Anwendungen und insbesondere auch bei Veränderungen der Eingriffsverhältnisse durch Ablagerungen oder Verschmutzungen zwischen den Zähnen treten beide Auflagen oder Abstützungen in einem mehr oder weniger unkontrollierbaren Zusammenspiel auf. Bei den offenen Zahnscheiben ist das zwar weniger der Fall, führt aber auch dort zu erhöhtem Verschleiß der Riemen und Räder. Eine Auflage der Riemenstege des Zahnriemens auf den Zahnköpfen der Scheibenverzahnung gilt dabei generell als weniger vorteilhaft.

Einer der Nachteile offener Zahnriemenscheiben besteht allerdings gerade darin, dass die Riemen, bedingt durch die Öffnungen am Zahngrund der Scheibe, eher mit dem Riemenstegen auf den Zahnköpfen der Scheibenverzahnung aufliegen. Dies kann zu Belastungen des Riemenkörpers und insbesondere der im Riemen eingebetteten Zugträger führen, was die Lebensdauer des Riemens verkürzen kann.

Ein weiterer Nachteil besteht darin, dass auch die Öffnungen bei offenen Zahnscheiben Probleme bereiten können. So kann es passieren, dass bei zu großen Öffnungen, d.h. bei einem zu breit ausgefräste Zahngrund, sich die Riemenzähne bei hoher Belastung in die Öffnung eindrücken und ein sauberes Auslaufen aus der Verzahnung nicht mehr möglich ist. Demgegenüber erlaubt zwar eine kleine Öffnung eine vorschriftsmäßige Anlage des Zahnriemens an die Zähne der Zahnscheibe, jedoch ist es dann möglich, dass Verschmutzungen zwischen den Zähnen nicht mehr ausgetragen werden können. Die richtige Auslegung und Anpassung sind also überaus schwierig.

Die DE 10 2019 213 096 A1 betrifft eine Zahnscheibe mit an ihrem Zahngrund über einen Teil der Zahnbreite zum Inneren der Zahnscheibe weisenden Öffnungen zur Abfuhr von Fremdkörpern oder Verschmutzungen zwischen den Zähnen. Jeweils eine der Zahnflanken eines Zahnes der Zahnscheibe weist ein Stützprofil zur teilweisen Aufnahme eines Zahnkopfs des Zahnriemens auf und die andere Zahnflanke ein Leit- oder Führungsprofil zur Ableitung von Fremdkörpern oder Verschmutzungen.

Nachteiliger Weise stützt sich der Zahnriemen nur mit Teilen seiner Zahnkopffläche auf den Stützprofilen der Scheibenverzahnung ab, was weiterhin zu einer ungleichmäßigen Verteilung mechanischer Spannungen im Riemen führen kann.

Um ein durch Querkräfte verursachtes Ablaufen der Zahnriemen von den Zahnscheiben zu verhindern, werden in aller Regel Führungselemente, oft ausgebildet als ringförmige, seitlich an der Zahnscheibe befestigte Kränze, so genannte Bordscheiben, vorgesehen. Dies ist insbesondere bei Schrägverzahnungen der Fall, die zwar ein weicheres und geräuschärmeres Laufverhalten zeigen als Geradverzahnungen, die aber eben durch die inhärente Axialkraftkomponente zum Ablaufen von Riemenscheiben neigen können. Aber auch bei geradverzahnten Zahnriementrieben sind Sicherungen gegen Ablaufen durch Querkräfte wichtig, so beispielsweise bei Zahnradantrieben von Zweirädern.

Die DE 10 2019 213 105 A1 betrifft eine Zahnscheibe mit ein- oder beidseitig angeordneten Führungselementen für den Zahnriemen, wobei die Führungselemente als eine Vielzahl von Führungsflanschen ausgebildet sind, die über den Umfang der Zahnscheibe verteilt angeordnet und über jeweils einen Teilumfang der Zahnscheibe ausgebildet sind, wobei die Führungsflansche mindestens einen der Zahnzwischenräume über mindestens einen Teilbereich der Zahnhöhe seitlich begrenzen. Die Zahnscheibe weist an ihrem Zahngrund über einen Teil der Zahnbreite zum Inneren der Zahnscheibe Öffnungen zur Abfuhr von Fremdkörpern oder Verschmutzungen zwischen den Zähnen auf.

Nachteiliger Weise stützt sich der Zahnriemen nur mit den Stegen des Zahnriemens auf den Zahnköpfen der Scheibenverzahnung ab, was zu punktuell hohen Belastungen im Zahnriemen und bzw. oder zu einer ungleichmäßigen Verteilung mechanischer Spannungen im Riemen führen kann.

Die der Erfindung zugrundeliegende Aufgabe besteht darin, eine Zahnscheibe für einen Zahnriementrieb bereitzustellen, die zwischen den Zähnen der Zahnscheibe ansammelnden Schmutz abführen kann und gleichzeitig im Vergleich zu bekannten Lösungen einen verbesserten Eingriff mit der Verzahnung eines Zahnriemens aufweist, sodass eine gleichmäßigere mechanische Spannungsverteilung innerhalb des Zahnriemens gewährleistet werden kann. Zusätzlich oder alternativ soll die Zahnscheibe einfach und bzw. oder kostengünstig herstellbar sein und in Zusammenspiel mit einem Zahnriemen hohe Leistungen übertragen können. Zusätzlich oder alternativ soll der die Zahnscheibe umschlingende Zahnriemen durch die Zahnscheibe seitlich geführt werden können.

Die Lösung dieser Aufgabe ergibt sich durch eine Zahnscheibe mit den Merkmalen des unabhängigen Anspruchs 1.

Weitere vorteilhafte Ausbildungen sind in den abhängigen Ansprüchen offenbart, sowie der allgemeinen Beschreibung sowie den Ausführungsbeispielen zu entnehmen.

Die vorliegende Anmeldung betrifft eine Zahnscheibe für einen Zahnriementrieb, bei dem ein Zahnriemen mit seiner verzahnten Antriebsseite die Zahnscheibe umlaufend umschlingt und die Verzahnungen von Zahnscheibe und Zahnriemen kämmend ineinandergreifen, wobei die Zahnscheibe jeweils an einem Zahnzwischenraum zwischen zwei Zähnen über einen Teil einer Zahnbreite zum Inneren der Zahnscheibe weisende Öffnungen zur Abfuhr von Fremdkörpern oder Verschmutzungen aufweist. Die Zahnscheibe weist wenigstens einen in Umfangsrichtung jeweils zwischen zwei Zähnen angeordneten Steg auf, wobei der Steg zur Aufnahme eines Zahnkopfs des Zahnriemens ausgebildet ist.

Durch den Steg kann der Zahnkopf des Zahnriemens über dessen Breite zumindest teilweise aufgenommen bzw. gestützt werden, wodurch eine Auflage der Riemenstege des Zahnriemens auf den Zahnköpfen der Scheibenverzahnung vermieden werden kann. Mit anderen Worten stützt sich der Zahnriemen mit einer Teilbreite seiner Zahnkopffläche auf dem Steg der Scheibenverzahnung ab, wodurch der Zahnriemen gleichmäßig belastet wird. Hierdurch kann der Verschleiß des Zahnriemens reduziert und bzw. oder die Lebensdauer des Zahnriemens verlängert werden. Zusätzlich oder alternativ kann der Zahnriemen eine höhere Leistung übertragen.

Die Zahnscheibe kann einteilig oder mehrteilig ausgeführt sein. Die Fertigung mehrerer Einzelteile, welche im Nachhinein zu einer Zahnscheibe zusammensetzbar oder zusammenfügbar sind, kann insbesondere bei besonders komplexen Geometrien oder Hinterschneidungen der Zahnscheibe zu einer einfacheren und kostengünstigeren Herstellung führen.

Zahnriemen können zwar wesentlich höhere Drehmomente als vergleichbare Flach- der Keilriemen übertragen, sind aber auch anfällig gegenüber Störungen des Zahneingriffs durch Verschmutzungen, Bei einem geschlossenem Zahnprofil können die Zähne des Antriebsriemens zwar optimal an der Zahnriemenscheibe anliegen, es können sich jedoch im Zahnprofil Fremdkörper ansammeln. Dies kann den Kontakt zwischen dem Riemen bzw. dessen Zähnen und der Zahnriemenscheibe beeinträchtigen und insbesondere die Tiefe des Profils der Zahnriemenscheibe derart verringern, dass es zu einem Überspringen der Zähne des Riemens gegenüber der Zahnscheibe kommen kann oder der Riemen aufgrund von mechanischer Schwächung durch eine zunehmende Knickbelastung reißen kann. Das kann durch die Öffnungen der erfindungsgemäßen Zahnscheibe auf vorteilhafte Weise sicher vermieden werden.

Gemäß einem weiteren Aspekt der vorliegenden Erfindung ist eine Breite des Stegs kleiner der Zahnbreite. Auf vorteilhafte Weise kann so eine ausreichend große Öffnung zur Schmutzableitung gewährleistet werden. Die maximale Tiefe der Öffnung ergibt sich aus der Subtraktion der Breite des Stegs von der Zahnbreite. Vorzugsweise ist die Zahnscheibe symmetrisch ausgebildet, sodass der Steg mittig angeordnet ist und sich eine Öffnung von dem Steg und bzw. oder dem Zahnscheibenkörper in axialer Richtung nach links und eine Öffnung von dem Steg und bzw. oder dem Zahnscheibenkörper in axialer Richtung nach rechts erstreckt. In diesem Ausführungsbeispiel ergibt sich die maximale Tiefe der linken Öffnung bzw. der rechten Öffnung aus der Subtraktion der Breite des Stegs von der Zahnbreite, dividiert durch zwei. Die Tiefe der Öffnungen kann über Radien auslaufen und in einer durch die Zahnseitenflächen aufgespannten Ebene münden. Mit anderen Worten kann sich die Tiefe der Öffnungen in Umfangsrichtung von einem Maximalwert auf einen Wert von Null annähern oder diesen erreichen.

Die Zahnscheibe kann in Bezug auf ihre Zenitebene zweigeteilt ausgebildet sein. Damit vereinfacht sich die Herstellung der Zahnscheibe dadurch, dass zwei ähnliche oder gleiche Teile hergestellt werden, die dann zu einer Zahnscheibe zusammengeführt werden.

Gemäß einem weiteren Aspekt der vorliegenden Erfindung verbindet der Steg zwei Zähne miteinander. So kann auf vorteilhafte Weise sichergestellt werden, dass der Zahnkopf des Zahnriemens zumindest auf einem Teilbereich der Zahnriemenbreite vollständig durch den Steg gestützt bzw. durch diesen aufgenommen wird.

Gemäß einem weiteren Aspekt der vorliegenden Erfindung ist die Zahnscheibe mit ein- oder beidseitig angeordneten Führungselementen zur seitlichen Führung des Zahnriemens versehen.

Die Führungselemente können in einer weiteren vorteilhaften Ausbildung als eine Vielzahl von Führungsflanschen ausgebildet sein. Die Führungsflansche können über den Umfang der Zahnscheibe verteilt angeordnet und über jeweils einen Teilumfang der Zahnscheibe ausgebildet sein, wobei die Führungsflansche jeweils mindestens einen der Zahnzwischenräume über mindestens einen Teilbereich der Zahnhöhe seitlich begrenzen.

Durch eine solche Ausbildung kann auf die Verwendung von Bordscheiben verzichtet und trotzdem auf eine sehr effektive Weise eine Zwangsführung des Zahnriemens erreichet werden. Dabei ist die Ausbildung von Führungsflanschen lediglich über Teile des Umfangs der Zahnscheibe völlig ausreichend.

Gemäß einem weiteren Aspekt der vorliegenden Erfindung begrenzen die Führungsflansche jeweils mindestens einen der Zahnzwischenräume von einer linken Seite oder einer rechten Seite der Zahnscheibe, wobei die Führungsflansche alternierend auf der linken Seite und der rechten Seite der Zahnscheibe angeordnet sind. Hierdurch kann nicht nur eine beidseitige sichere Führung des Zahnriemens erreicht, sondern auch die Erwärmung des Riemens verringert werden, die beispielsweise durch dauerhaftes Anlaufen oder Reiben der Riemenseitenbereiche an einer Bordscheibe entstehen könnte.

Die Führungsflansche können in einer durch die Zahnseitenflächen aufgespannten Ebene angeordnet und als Ringsegmente ausgebildet sein, die jeweils mindestens einen Zahnzwischenraum über maximal die Zahnhöhe überdecken und begrenzen. Die Führungsflansche können so direkt an der Seite des Zahnscheibenprofils wirken, sodass ein seitliches Hin- und Herwandern des Riemens vermieden werden kann. Die Führungsflansche können stoffschlüssig oder formschlüssig mit der Zahnscheibe verbunden sein. Dabei können die Führungselemente beispielsweise durch Kleben oder durch Press- oder Klemmverfahren kalt aufgebracht werden. Natürlich sind hier auch verschiedenste Schweißverfahren möglich, je nach Werkstoffkonstellation.

Alternativ können die Führungsflansche einstückig mit der Zahnscheibe ausgebildet sein. Bei einer solchen Ausführung erübrigt sich jegliche Art der Montage, da die Zahnscheibe beispielsweise durch spanende Bearbeitung, beispielsweise durch Fräsen, oder auch durch formgebende Verfahren wie etwa Druck-Guss-Verfahren bereits vollständig und einbaufertig hergestellt werden kann.

Gemäß einem weiteren Aspekt der vorliegenden Erfindung weist die Zahnscheibe einen Zahnscheibenkörper auf, von dem die Zähne der Zahnscheibe in axialer Richtung ein- oder beidseitig auskragend ausgebildet sind. Die Zahnscheibenzähne sind am Zahnfuß lediglich über einen Teil der Zahnbreite mit dem Zahnscheibenkörper bzw. dem Steg verbunden. Neben der dadurch erreichbaren Gewichtsersparnis lässt sich angepasst an die jeweilige Belastungssituation und Leistungsübertragung einerseits eine ausreichende Abstützung und Momentenübertragung durch den Zahnriemen erreichen und andererseits eine sichere und saubere Abfuhr von Verschmutzungen, da sich durch die Auskragung entsprechend große Öffnungen im Zahnfußbereich bilden.

Bei einer beidseitigen Auskragung der Zähne der Zahnscheibe von dem Zahnscheibenkörper kann die Zahnscheibe aus zwei bezüglich ihrer Zenitebene symmetrischen Halbscheiben bestehen, welche um einen Winkel verdreht so zusammengesetzt sein können, dass die Führungsflansche beidseitig abwechselnd mindestens einen der Zahnzwischenräume begrenzen.

Die Erfindung betrifft außerdem einen Zahnriementrieb mit einer erfindungsgemäßen Zahnscheibe. Die zuvor genannten Eigenschaften und Vorteile lassen sich so auf jeden beliebigen Zahnriementrieb übertragen, der vorzugsweise in einer verschmutzten Umgebung eingesetzt werden kann.

Dies kann gemäß einem weiteren Aspekt der vorliegenden Erfindung eine Fördereinrichtung einer Erntemaschine mit einem erfindungsgemäßen Zahnriementrieb sein.

Die zuvor genannten Eigenschaften und Vorteile lassen sich auch auf ein Zweirad, insbesondere ein Fahrrad oder ein Motorrad sowie deren Derivate mit einem erfindungsgemäßen Zahnriementrieb übertragen.

Der Zahnriementrieb ist in den zuvor genannten Anwendungen oft ungeschützt einer staubigen oder schmutzigen Umgebung ausgesetzt. Die erfindungsgemäße Ausführung stellt dann eine sichere Riemenführung sowie eine ausreichende Leistungsübertragung auch bei Verschmutzungen bereit.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand des Anspruchs 1 kombinierbar sind.

Anhand der Zeichnungen werden im Folgenden Ausführungsbeispiele der Erfindung schematisch dargestellt und näher erläutert.

Darin zeigt:
- Fig. 1: eine erfindungsgemäße Zahnscheibe.
- Fig. 2: eine Teilansicht der erfindungsgemäßen Zahnscheibe gemäß Fig. 1.
- Fig. 3: eine perspektivische Darstellung eines eine Zahnscheibe umlaufenden Zahnriemens.

Die Beschreibung der o.g. Figuren erfolgt in zylindrischen Koordinaten mit einer Längsachse X, einer zur Längsachse X senkrecht ausgerichteten radialen Richtung R sowie einer um die Längsachse X umlaufenden Umfangsrichtung U. Die Längsachse X, die radiale Richtung R und die Umfangsrichtung U können gemeinsam auch als Raumrichtungen X, R, U bzw. als zylindrische Raumrichtungen X, R, U bezeichnet werden.

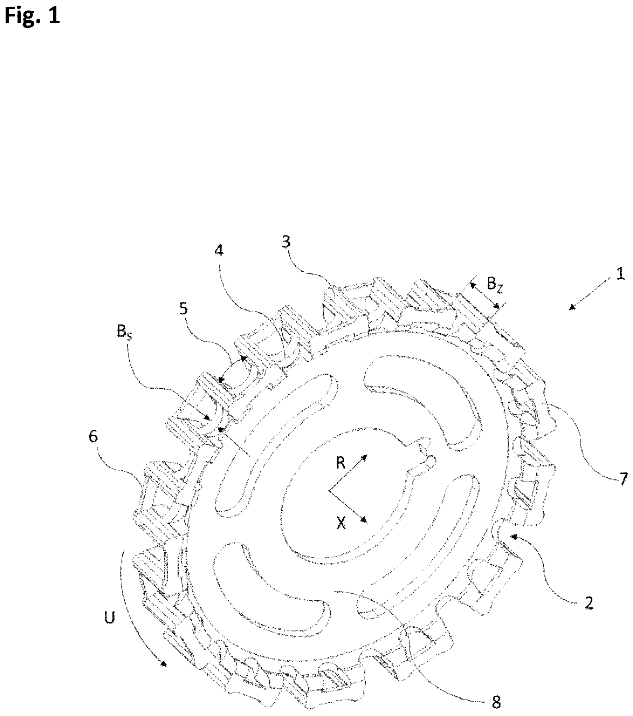

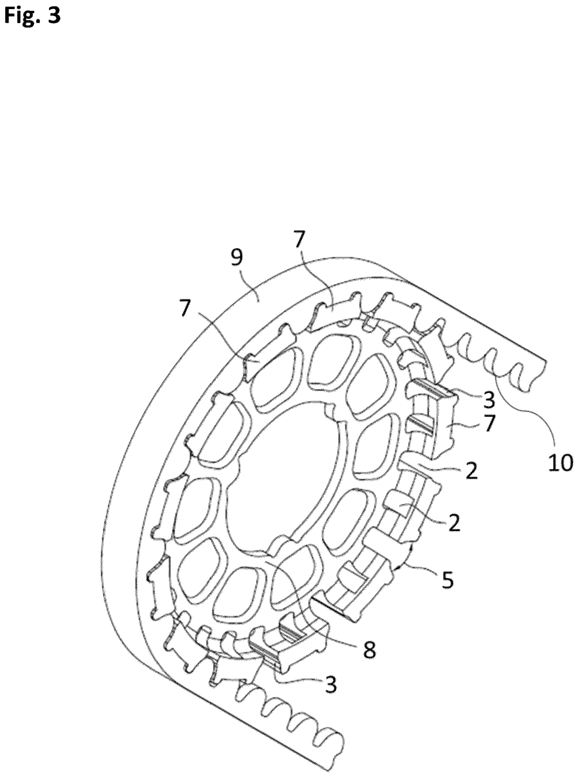

Fig. 1 zeigt schematisch und in einer perspektivischen Darstellung eine erfindungsgemäße Zahnscheibe 1 eines Zahnriementriebs. Zur Verdeutlichung der Merkmale der Zahnscheibe 1 ist ein zugehöriger Zahnriemen in der Fig. 1 nicht dargestellt. Eine perspektivische Zusammenstellung eines die Zahnriemenscheibe 1 umlaufenden Zahnriemens 9 ist in der Fig. 3 dargestellt, in der deutlich wird, dass der Zahnriemen 9 aus elastomerem Material mit seiner verzahnten Antriebsseite die Zahnscheibe 1 umlaufend umschlingt und die Verzahnungen von Zahnscheibe 1 und Zahnriemen 9 kämmend ineinandergreifen.

Die Zahnscheibe 1 weist einen in Umfangsrichtung U jeweils zwischen zwei Zähnen 3 angeordneten Steg 4 auf, wobei der Steg 4 zur Aufnahme eines Zahnkopfs 10 des Zahnriemens 9 ausgebildet ist. Der Steg 4 verbindet jeweils zwei in Umfangsrichtung U nebeneinander angeordnete Zähne 3 der Zahnscheibe 1 miteinander.

Der Steg 4 weist eine Breite Bs auf, wobei die Stegbreite Bs kleiner einer Breite Bz eines Zahns 3 der Zahnscheibe 1 ist. Die Größe einer Öffnung 2 zur Schumutzabführung zwischen zwei Zähnen 3 ergibt sich aus der Subtraktion der Breite des Stegs Bs von der Zahnbreite Bz. Da die Zahnscheibe 1 symmetrisch ausgebildet ist, ist der Steg 4 mittig angeordnet, sodass sich die Öffnung 2 von einem Zahnscheibenkörper 8 und bzw. oder Steg 4 in axialer Richtung bzw. entlang der Längsachse X nach links und eine Öffnung 2 von dem Zahnscheibenkörper 8 und bzw. oder dem Steg 4 in axialer Richtung bzw. entlang der Längsachse X nach rechts erstreckt. So ergibt sich die maximale Tiefe der linken Öffnung 2 bzw. der rechten Öffnung 2 aus der Subtraktion der Breite des Stegs Bs von der Zahnbreite B_{Z,} dividiert durch zwei. Die Tiefe der Öffnungen 2 läuft über Radien aus und mündet in einer durch die Zahnseitenflächen aufgespannten Ebene.

Die Zahnscheibe 1 ist in dieser Ausführung mit beidseitig angeordneten Führungselementen für den Zahnriemen 9 versehen. Wie in Fig. 1 dargestellt, sind die Führungselemente als eine Vielzahl von Führungsflanschen 6, 7 ausgebildet, die über den Umfang U der Zahnscheibe 1 verteilt angeordnet und über jeweils einen Teilumfang der Zahnscheibe 1 ausgebildet sind. Die die Führungsflansche 6, 7 begrenzen beidseitig abwechselnd jeweils einen Zahnzwischenraum 5 seitlich über etwa die Höhe des Zahns 3 der Zahnscheibe 1.

Die Führungsflansche 6, 7 sind dabei in der durch die Zahnseitenflächen aufgespannten Ebene angeordnet und einstückig mit der Zahnscheibe 1 ausgebildet, nämlich in dieser Ausführung stoffschlüssig mit der Zahnscheibe 1 verbunden, wobei Letztere aus einem Stück durch ein automatisch gesteuertes Fräsverfahren hergestellt ist.

Die Zahnscheibe 1 besitzt an ihrem Zahngrund über einen Teil der Zahnbreite Bz zum Inneren der Zahnscheibe 1 weisende Öffnungen 2, nämlich zur Abfuhr von Fremdkörpern oder Verschmutzungen zwischen den Zähnen 3. Die Zähne 3 der Zahnscheibe 1 sind beidseitig auskragend von dem Zahnscheibenkörper 8 ausgebildet.

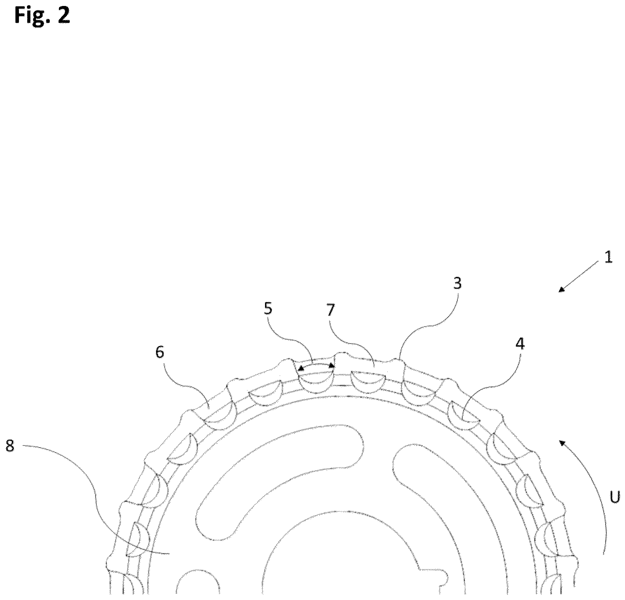

Fig. 2 zeigt eine Teilansicht der erfindungsgemäßen Zahnscheibe 1 gemäß Fig. 1 von der Seite. Deutlich erkennbar sind die Führungsflansche 6, 7, der Zahnscheibenkörper 8, sowie die sich in radialer Richtung R in den Zahnzwischenräumen 5 erstreckenden Stege 4. Erkennbar ist auch, dass die Führungsflansche 6, 7 als Ringsegmente ausgebildet sind, die jeweils den Zahnzwischenraum 5 über die Höhe eines Zahns 3 der Zahnscheibe 1 überdecken und begrenzen.

### Bezugszeichenliste (Teil der Beschreibung)

- 1: Zahnscheibe
- 2: Öffnung
- 3: Zahn
- 4: Steg
- 5: Zahnzwischenraum
- 6: Führungsflansch
- 7: Führungsflansch
- 8: Zahnscheibenkörper
- 9: Zahnriemen
- 10: Zahnkopf

- R: radiale Richtung
- U: Umfangsrichtung
- X: Längsachse, axiale Richtung

## Patentansprüche

1. Zahnscheibe (1) für einen Zahnriementrieb, bei dem ein Zahnriemen (9) mit seiner verzahnten Antriebsseite die Zahnscheibe (1) umlaufend umschlingt und die Verzahnungen von Zahnscheibe (1) und Zahnriemen (9) kämmend ineinandergreifen,
wobei die Zahnscheibe (1) jeweils an einem Zahnzwischenraum (5) zwischen zwei Zähnen (3) über einen Teil einer Zahnbreite (Bz) zum Inneren der Zahnscheibe (1) weisende Öffnungen (2) zur Abfuhr von Fremdkörpern oder Verschmutzungen aufweist,
**dadurch gekennzeichnet, dass**
die Zahnscheibe (1) wenigstens einen in Umfangsrichtung (U) jeweils zwischen zwei Zähnen (3) angeordneten Steg (4) aufweist, wobei der Steg (4) zur Aufnahme eines Zahnkopfs (10) des Zahnriemens (9) ausgebildet ist.

2. Zahnscheibe (1) nach Anspruch 1,
**dadurch gekennzeichnet, dass**
eine Breite (Bs) des Stegs (4) kleiner der Zahnbreite (Bz) ist.

3. Zahnscheibe (1) nach einem der vorhergehenden Ansprüche,
**dadurch gekennzeichnet, dass**
der Steg (4) zwei Zähne (3) miteinander verbindet.

4. Zahnscheibe (1) nach einem der vorhergehenden Ansprüche,
**dadurch gekennzeichnet, dass**
die Zahnscheibe (1) mit ein- oder beidseitig angeordneten Führungselementen zur seitlichen Führung des Zahnriemens (9) versehen ist.

5. Zahnscheibe (1) nach Anspruch 4,
**dadurch gekennzeichnet, dass**
die Führungselemente als eine Vielzahl von Führungsflanschen (6, 7) ausgebildet sind, die über jeweils einen Teilumfang der Zahnscheibe (1) ausgebildet sind.

6. Zahnscheibe (1) nach Anspruch 5,
**dadurch gekennzeichnet, dass**
die Führungsflansche (6, 7) jeweils mindestens einen der Zahnzwischenräume (5) von einer linken Seite oder einer rechten Seite der Zahnscheibe (1) begrenzen, wobei die Führungsflansche (6, 7) alternierend auf der linken Seite und der rechten Seite der Zahnscheibe (1) angeordnet sind.

7. Zahnscheibe (1) nach einem der vorhergehenden Ansprüche,
**dadurch gekennzeichnet, dass**
die Zahnscheibe (1) einen Zahnscheibenkörper (8) aufweist, von dem die Zähne (3) der Zahnscheibe (1) in axialer Richtung (X) ein- oder beidseitig auskragend ausgebildet sind.

8. Zahnriementrieb mit einer Zahnscheibe (1) nach einem der Ansprüche 1 bis 7.

9. Fördereinrichtung einer Erntemaschine mit einem Zahnriementrieb nach Anspruch 8.

10. Zweirad mit einem Zahnriementrieb nach Anspruch 8.
